# EUROPEAN PATENT APPLICATION

(11) **EP 1 183 951 A2**
(43) Date of publication of application: **06.03.2002**
(21) Application number: 01203101.9
(22) Date of filing: 14.08.2001
(51) Int. Cl.: A22B 5/00

(54) **Method and apparatus for automatically removing hooves from a carcass**

(30) Priority: 01.09.2000 GB 0021597; 18.05.2001 GB 0112174
(71) Applicant: V.W.V. NV, 8630 Veurne (BE)
(72) Inventor: De Coster, Ignace, 8755 Ruiselede (BE)
(74) Representative: Bird, Ariane

(57) **Abstract**

The present invention relates to a method and an apparatus for automatically removing hooves of slaughtered hoofed animals.

A method for automatically removing a hoof from at least one toe of a leg of a slaughtered hoofed animal is described. The method comprises a pressing step whereby pressure is applied on two opposite sides of the hoof, and a removing step whereby the hoof is removed without damaging the leg. The removing step may consist of tearing off the hoof from the toe, or it may consists of cutting the hoof and the toe without damaging the leg.

The present invention also discloses an apparatus for carrying out the method. The apparatus comprises at least one grasping-element with two jaws for grasping the hoof of at least one toe of the carcass, driving means for applying a translational movement to at least one of the jaws of the grasping-element for moving it towards the other jaw, and driving means for moving the grasping-element towards the animal's toe and away from the toe again.

## Description

### Technical field of the invention

The present invention relates to a method and an apparatus for automatically removing hooves of slaughtered hoofed animals. A hoof is a curved covering of horn that protects the front of or encloses the ends of the digits of an ungulate animal and that corresponds to a nail or claw. A pig has a cloven hoof: a foot which is divided into two parts at its distal extremity. Each of those parts is called a toe, and each of those toes is enclosed by a hoof.

The present invention applies in particular to animals with hooves enclosing toes, such as pigs for example.

### Background of the invention

In the context of the present invention, the term "pig" is used for the slaughtered animal with the kind of hooves as described above. In this description, reference to pigs is not meant to exclude hogs or any classified species of swine, and is particularly not meant to distinguish between sexually mature or immature animals or animals which have been castrated. It is furthermore not intended to exclude from the present patent application other suitable hoofed animals, such as sheep or goats.

The hoof of a pig is connected at the front side of the toe by means of a membrane, which can easily be loosened. At the back side of the toe, the hoof is firmly affixed on the toe by means of a plurality of lamellae. The surface of fixing is ribbed and is therefore much bigger. At the back side of the toe, the hoof cannot be easily loosened.

A slaughter operation involves several steps. In particular a pig slaughter operation is described hereinafter.

The slaughter operation generally begins with a step of individually stunning each pig. This is generally done by introducing an electrical shock or by CO2 gas stunning, which renders the pig unconscious.

Once the pig is rendered unconscious, it is bled and elevated, generally by its hind legs.

Once the pig has been bled, the carcass is processed to remove hair and debris. This processing involves scalding the carcass in a tank of hot water. Thereby the carcass is put in a vessel so that the lower body surfaces (belly, legs and hams) and the upper body portion (head, shoulders and back) can be sprayed with hot water, generally between 55°C and 70°C. This loosens and softens the bristles, hard parts, and outer skin layer. Subsequently the skin is singed, i.e. briefly exposed to a gas flame to make the carcass bacteria free and to remove the remaining bristles and hair, polished, rinsed, and scraped.

If the pig's carcass is scalded for 4 minutes with water of a temperature between 60°C and 62°C, the hooves are not loosened enough to be easily removable, but the bristles and hair can be removed by scraping. After 5 minutes, about 30% of the hooves are loosened and removed, and after 6 minutes, about 90% of the hooves are removed. It is only if the scalding takes about 8 minutes at these temperatures, that all hooves are removed.

It is however observed that the longer the carcass is submerged in the hot water, the more the quality of the meat deteriorates. Therefore, slaughter-houses generally tend to let the pig's carcasses undergo the scalding operation for a shorter period of time, and they provide means for manually removing the not yet removed hooves afterwards, as hooves must be removed according to EEC and hygienic inspection rules. These means generally consist of pincers with which the hooves and part of the leg are cut off. This way of operating has two disadvantages. Firstly, the hooves must be removed manually, which requires quite some force from a person removing them. And secondly, manually it is almost impossible to just remove the hoof, as this hoof is substantially conical in form and thus the pincers will easily slide off. Therefore, not only the hoof but also part of the leg are removed, which causes meat to be possibly contaminated by bacteria.

It is therefore an object of the present invention to provide an improved method and apparatus for automatically removing hooves of slaughtered hoofed animals, while preserving the best possible quality of meat.

### Summary of the invention

The present invention discloses a method for automatically removing a hoof from at least one toe of a leg of a slaughtered hoofed animal. The method comprises a locating step, whereby the toe is located in an opening of a tool to remove the hoof, a closing step whereby the tool is closed onto the toe, thereby applying non-cutting pressure on two opposite sides of the hoof, and a removing step whereby the hoof is removed without substantially damaging the leg. According to a preferred embodiment, the removing step may consist of pulling off the hoof from the toe, which hoof has already been loosened during scalding. According to a first embodiment, this pulling off step may include levering off the hoof by tilting or rotating the tool. According to a second embodiment, the pulling off step includes moving the tool away from the toe.

The present invention also discloses an apparatus for automatically removing a hoof from at least one toe of a leg of a slaughtered hoofed animal. The apparatus comprises at least one non-cutting grasping-element having two jaws for grasping the hoof of at least one toe of the carcass, first driving means for applying a translational movement to at least one of the jaws of the grasping-element for moving it towards the other jaw, meanwhile pinching the hoof, and second driving means for moving the grasping-element towards the animal's toe with hoof and away from the toe again. The hoof may be removed while moving the grasping-element away from the animal's toe, and the second driving means may be adapted to do this. For example, the second driving means may be adapted to rotate the grasping-element. Hereinafter, the jaw which can undergo a translational movement is also called the "pinching part", and the translational movement is also called a "pinching movement".

According to a first embodiment, the hoof is removed from the toe by consecutive movements carried out by the apparatus described, driven by the first and second driving means. These consecutive movements may comprise: a substantially horizontal forward movement of the grasping-element up to above the toe (by "forward" is meant: in a direction towards the body of the slaughtered animal), a substantially vertical downward movement of the grasping-element for placement over the toe, a pinching movement of the pinching part for pinching the hoof, a substantially vertical upward movement of the grasping-element, and a substantially horizontal backward movement of the grasping-element. The substantially vertical movement may be replaced by a tilting movement. By the upward and the backward movement of the grasping-element while pinching the hoof, the hoof is removed from the toe.

The grasping-element preferably comprises a smooth front surface as a first of the jaws where it comes into contact with the hoof, while the pinching part (the second jaw) preferably has a ribbed or deeply carved surface. This pinching part, while pressing on the hoof, forces it to loosen from the toe at the backside. The smooth surface of the front side of the grasping-element makes the hoof tilt slightly towards the backside, which tilting assists in loosening the hoof at the backside.

The second driving means may comprise horizontal and vertical driving means, and/or tilting means. All driving means may for example be, but are not limited to, a piston and cylinder combination. Other possible embodiments of the driving means include an electric motor gearbox or a hydraulic driven motor or piston.

According to a further embodiment, the grasping-element comprises as first and second jaws two rollers with their longitudinal axis being placed parallel. At least one of the rollers can undergo a translational movement with respect to the other roller, so that the distance between both rollers can be altered. In this embodiment the second driving means is also provided with horizontal and vertical driving means and/or tilting means, in order to bring the rollers in close contact with the hoofed toe. A substantially horizontal forward movement of the grasping-element up to above the toe is carried out, a substantially vertical downward movement of the grasping-element comprising a set of rollers for placement over the toe is then carried out, so that the toe is located in an opening of the grasping-element, and thereafter both rollers are moved towards each other so that the jaws of the grasping element are closed and the toe is pinched in between them.

In this embodiment, at least one of the rollers is provided with rotational driving means for providing rotational movement thereof, and this rotational movement of at least one of the rollers removes the hoof from the toe. During or after removal of the hoof, the grasping-element is moved back to its initial position again, ready for removing a next hoof.

One set of rollers may be provided for removing the hooves from two legs of a carcass at the same time, or separate sets of rollers may be provided for removing the hooves from two legs of a carcass at the same time, or a same set of rollers may be used for removing the hooves from two legs of a carcass one after the other.

Preferably, the rollers are made from steel. Preferably at least one of them is provided with at least an outer layer of anti-slip material, possibly both are provided with an outer layer of anti-slip material. This anti-slip material may be a separate layer of other material, or it may be a profiled outer layer of the steel, such as ribs.

It should be understood that the slaughter operation of the present invention is generally an assembly line type operation where each pig is moved and processed along a series of stations. While the description often focuses on the processing of a single pig, it should be understood that the slaughter operation of the present invention includes the processing of numerous pigs in a continuous line operation as well as the processing of other hoofed animals.

Other features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic top view of a first embodiment of an apparatus according to the present invention.
Fig. 2 is a schematic side view of the apparatus of Fig. 1.
Fig. 3 is a schematic front view of the apparatus of Fig. 1.
Fig. 4 is a schematic bottom view of a grasping-element with a pinching part according to a first embodiment of the present invention.
Fig. 5A and Fig. 5B are two possible embodiments of cross-sectional views of the pinching part according to line V-V' of Fig. 4.
Fig. 6 is a cross-sectional view of the grasping-element according to line VI-VI' in Fig. 4.
Fig. 7 is a schematic bottom view of a third embodiment of a grasping-element according to the present invention, the grasping-element comprising a set of rollers as first and second jaws.

In the different drawings, the same reference numbers refer to the same or analogous elements.

### Description of the illustrative embodiments

The present invention will be described with respect to a particular embodiment and with reference to the drawings but the invention is not limited thereto but only by the claims. The drawings described are only schematic and are non-limiting.

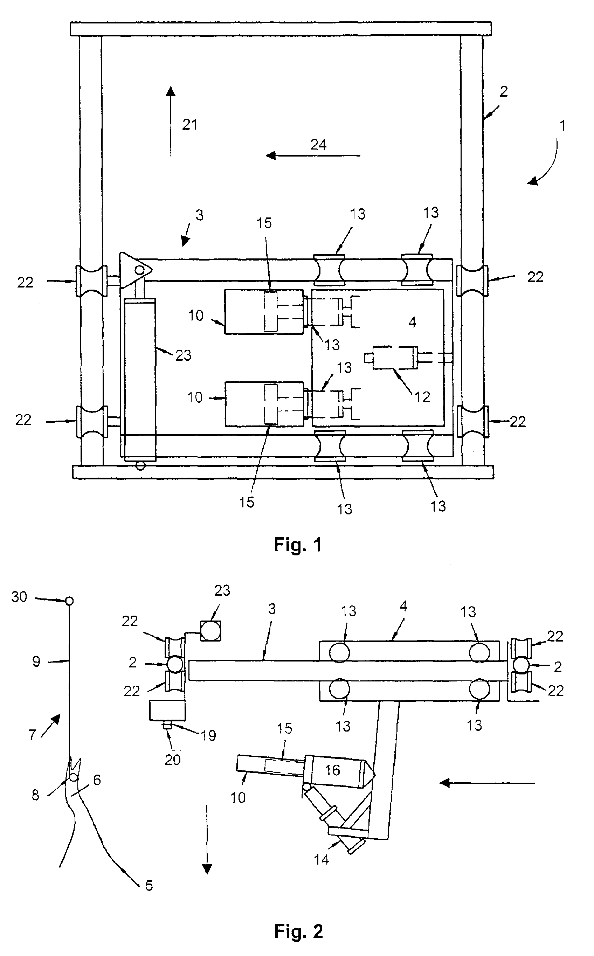

Fig. 1 principally depicts a top view of an embodiment of an installation 1 for automatically removing hooves of slaughtered hoofed animals according to the present invention. This installation 1 comprises a fixed primary frame 2 on which a secondary frame 3 can be moved, e.g. by means of rollers 22. An apparatus 4 according to the present invention can be moved on the secondary frame 3, e.g. by means of rollers 13.

In slaughter operation, carcasses 5 hang at two legs 6, generally the hind legs, from a so-called spreader 7 (suspension brace). This spreader has two ends 8 which in the position in which the spreader 7 is used point upwards an are each inserted through a hind leg 6 between the bone and the adjacent tendons. The spreader 7 is further provided with a conveyance hook 9, by means of which conveyance of the slaughtered animal 5 on the spreader 7 through the slaughterhouse is achieved with a conveyor 30.

In the embodiment described in the drawings, the apparatus 4 comprises two grasping-elements 10 for grasping both hooves 11 of the slaughtered animal 5. In an alternative embodiment, the apparatus 4 might for example comprise only one grasping-element which is to be placed successively over both hooves on the hind legs of a carcass.

The grasping-elements 10 are preferably box-like bodies with their open side towards the underside of the apparatus 4, but may be of any other suitable form (e.g. open at bottom side and top side). Each grasping-element 10 comprises two jaws. If a carcass 5 is located in front of the apparatus 4, horizontal driving means 12 drive the movement of the apparatus 4 with the grasping-elements 10 towards the carcass 5 (in the direction of the arrow 24 in Fig. 1, Fig. 2 and Fig. 3). This is a horizontal movement of the apparatus 4 with respect to the secondary frame 3 and the primary frame 1. The horizontal driving means 12 as represented in Fig. 1 are a piston and cylinder arrangement, but may be any other driving means which can provide the required movement such as an electric, pneumatic or hydraulic motor for example. The apparatus 4 moves on the secondary frame 3, e.g. by means of wheels 13 or in smoothly sliding contact, until the end of its run (the hooves 11 are always at almost the same distance from the installation 1, as they are located there by the spreader 7, the position of which may change in longitudinal direction, but not in lateral direction with regard to the conveyor 30).

Then the grasping-elements 10 are lowered (vertical movement with regard to the primary frame 2 and secondary frame 3 - in the direction of arrow 25 in Fig. 2), e.g. driven by a piston and cylinder assembly 14, or by any other suitable means. This lowering movement is carried out until a certain pre-set pressure is encountered, which is caused by pushing a grasping-element 10 on a hoof 11. Both grasping-elements 10 are preferably driven separately and may then be lowered over a different distance with regard to each other if the top of both hooves 11 is not located at the same height.

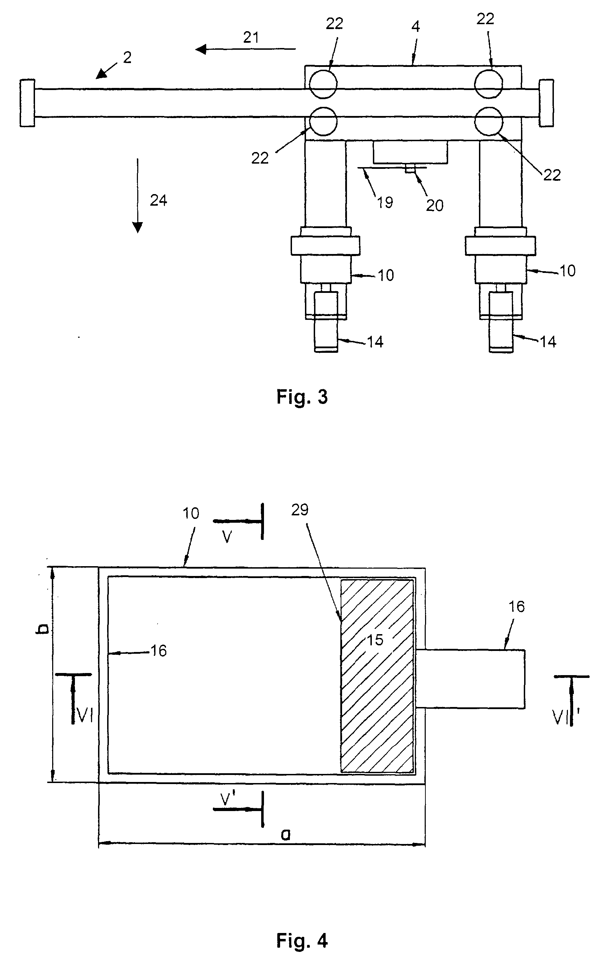

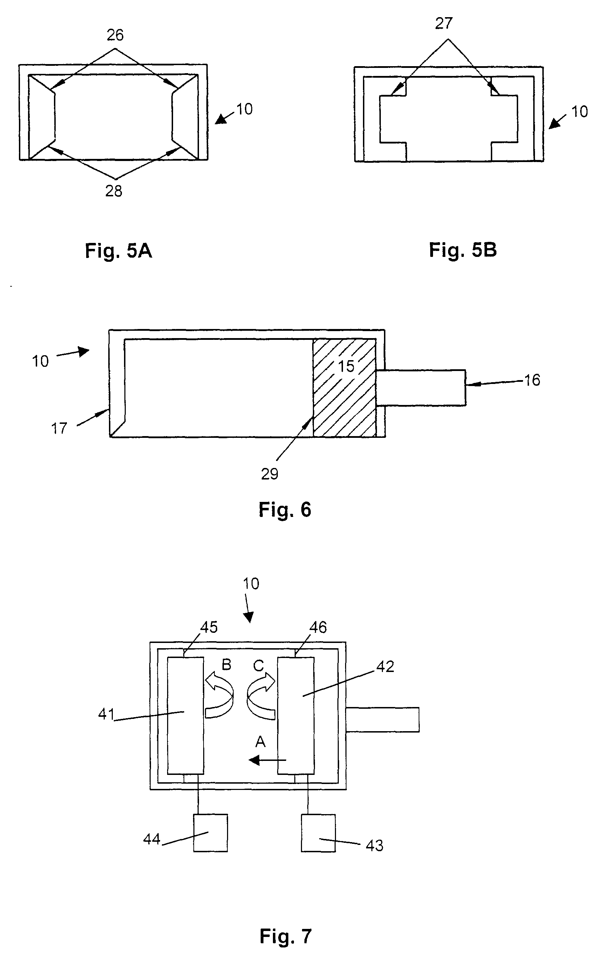

Next a pinching part 15 (Fig. 4 and Fig. 7), which is one of the jaws of the grasping-element 10, is moved towards the carcass 5, in the direction of arrow 24. Also this movement may be driven by a piston and cylinder arrangement 16 or by any other suitable driving means. This pinching part 15 is moved until its movement is blocked. The movement of the pinching part 15 is e.g. guided by a dovetail's guidance 26 as represented in Fig. 5A or by a sliding groove guidance 27 as represented in Fig. 5B. The hoof 11 of the carcass is pinched between the pinching part 15 and the front side 17 of the grasping-element 10, which forms the second jaw. Of the two embodiments represented in Fig. 5A and Fig. 5B, the dovetail's guidance 26 is the better one, as this embodiment enables easier placement of the grasping-element 10 on a hoof 11 due to the slanted parts 28 at the bottom side of the grasping-element 10.

The pinching part 15 has a contact surface 29 which preferably is deeply carved (notches of 0.5 to 2 millimetres or even more) in order for the pinching part 15 to have a good grip on the hoof 11. Furthermore, the front side 17 of the grasping-element 10 is preferably smooth towards the inner side of the grasping-element 10. Said front side 17 is preferably slanted at its under side in order not to get damage to the toe when the toe and the hoof are pinched.

The grasping-element 10 is moved up again (in the direction opposite to the direction of the arrow 25 in Fig. 2), driven by the piston and cylinder assembly 14 or by any other suitable driving means, while the hoof 11 is still pinched. The hoof 11, which had already loosened during scalding, is torn off or pulled off from the toe. Preferably the apparatus 4 moves to its initial position or to a fixed intermediate position (by means of the piston and cylinder arrangement 12 or any other suitable driving means) before the pinching part 15 returns to its initial position (by means of the piston and cylinder arrangement 16 or by any other driving means), in order to be able to collect the hooves on a fixed location. However, in an alternative embodiment, the pinching part 15 returns from its end position and thus stops pinching the hoof 11, which falls down under gravity, before the apparatus 4 returns to its initial position.

Possible dimensions of a grasping-element 10 might for example be (see Fig. 4): length a = 120 mm, width b = 100 mm, height (direction perpendicular to the plane of Fig. 4) = between 30 and 40 mm. The height of the grasping-element 10 must be such that it is not higher than the height of the hoof of the carcasses to be treated, otherwise also part of the leg gets pinched, and then it becomes very difficult to tear of the hoof.

The hooves of a pig are generally between 30 and 40 mm long. If they are pinched at one centimetre from the end, and the method and apparatus for tearing of the hoof are used, then no remainders of the hoof are left.

Fig. 7 shows a further embodiment of a grasping-element 10 according to the present invention, which can be used with the installation of Figs. 1 to 3. It comprises a frame 40, on or in which axes 45, 46 of two rollers 41, 42 are mounted in parallel. At least one of the rollers, e.g. roller 42 can undergo a translational movement towards the other one and is provided therefor with a driving means 43 for providing translational movement in the direction of arrow A and back again. In an alternative embodiment, both rollers 41, 42 can be provided with a driving means for providing translational movement towards and away from each other.

First the toe is located in the opening between both roller 41, 42. By moving at least one of the rollers 41, 42 towards the other when a hoof is located in between them, the grasping-element 10 is closed on the toe and non-cutting pressure is applied on two opposite sides of the hoof. At least roller 41 is provided with a rotational drive for rotating roller 41 in the direction of arrow B so as to remove the hoof. In a preferred embodiment, both rollers 41, 42 may be provided with a rotational drive for rotating them in reverse rotation, in the direction of arrows B and C.

The removed hoof may be taken away via the (open) topside of the grasping-element 10 (i.e. the backside in the bottom view of Fig. 7). The removed hoof may also be taken away via the bottom side of the grasping-element 10, preferably under gravity.

Preferably at least one of the rollers 45, 46 is provided with a profiled, textured or deeply carved contact surface. The other one may have a smooth surface, or may also have a profiled, textured or deeply carved surface.

As the legs of a slaughtered animal usually do not point straight up when the animal hangs at the spreader, but point under an angle between 15 and 30° with respect to a vertical axis, also the grasping-elements 10 are preferably positioned at an angle between 15 and 30° with respect to a vertical axis.

As mentioned before, the slaughter operation is generally an assembly line type operation where each pig is moved and processed along a series of stations. It is preferred that the conveyor 30 which conveys the slaughtered animal 5 on the spreader 7 through the slaughterhouse need not to be stopped, in order to optimise slaughtering activities in the slaughterhouse.

The whole operation of removing the hooves from a carcass 5 according to the present invention takes about between 6 and 8 seconds. In order for it not to be necessary for the conveyor 30 to stop each time the hooves 11 of a carcass 5 are to be removed, means are provided for synchronous movement of the apparatus 4 with the carcass.

Those means for synchronous movement may be mechanical, such as a rod 19 attached to the secondary frame 3, and which is placed rotatable around a vertical axis 20. Before the removing operation begins, the rod 19 is rotated so as to project towards the place where a carcass 5 will pass by. When the carcass 5 passes by, the conveyance hook 9 of the spreader 7 going up towards the conveyor 30, bumps against the rod 19. The continued movement of the spreader 7 on the conveyor takes the rod 19, and thus also the secondary frame 3 to which it is attached, with it, in the direction of movement represented by the arrow 21. The secondary frame 3 can move with respect to the primary frame 2, e.g. by means of the rollers 22 or by smoothly sliding contact. Once the hoof removing operation is finished, the rod 19 is rotated so as to let the carcass 5 continue its movement imposed by the movement of the conveyor 30, without further taking the secondary frame 3 with it. Returning means such as for example a piston and cylinder assembly 23 or a spring are provided for returning the secondary frame to its initial position, being the position as represented in Fig. 1.

According to another embodiment of the present invention, the means for synchronous movement may be electronic (not represented in the drawings), whereby the presence of a carcass 5 in front of the apparatus 4 is for example detected by visual inspection. The synchronous movement of the apparatus 4 with the carcass 5 may also be driven by electronic means, as known by a person skilled in the art.

While the invention has been shown and described with reference to preferred embodiments, it will be understood by those skilled in the art that various changes or modifications in form and detail may be made without departing from the scope and spirit of this invention.

## Claims

1. Method for automatically removing a hoof from at least one toe of a leg of a slaughtered hoofed animal, in particular a pig, **characterised in that** it comprises:
- locating the toe in an opening of a tool to remove the hoof,
- closing the tool onto the toe to thereby apply non-cutting pressure on two opposite sides of the hoof, and
- a removing step whereby the hoof is removed.

2. Method according to claim 1, whereby the removing step consists of pulling off the hoof from the toe.

3. Method according to claim 2, wherein the pulling off step includes levering off the hoof by tiliting or rotating the tool.

4. Method according to claim 2 or 3, wherein the pulling off step includes moving the tool away from the toe.

5. Apparatus for automatically removing a hoof from at least one toe of a leg of a slaughtered hoofed animal, in particular a pig, **characterised in that** it comprises
at least one non-cutting grasping-element having two jaws for grasping the hoof of at least one toe of the animal,
first driving means for applying a translational movement to at least one of the jaws of the grasping-element for moving it towards the other jaw,
second driving means for moving the grasping-element towards and away from the animal's toe with hoof.

6. Apparatus according to claim 5, whereby the second driving means is adapted to remove the hoof while moving away.

7. Apparatus according to claim 6, whereby the second driving means is adapted to rotate the grasping element.

8. Apparatus according to any of claims 5 to 7, whereby the jaws of the grasping-element comprise a first and a second roller.

9. Apparatus according to any of claims 5 to 8, whereby the second driving means comprise horizontal driving means and vertical driving means for moving the grasping-element.

10. Apparatus according to any of claims 5 to 9, whereby the second driving means comprise tilting means.

11. Apparatus according to any of claims 5 to 10, whereby the first or second driving means comprise a piston and a cylinder.

12. Apparatus according to any of claims 5 to 11, furthermore comprising synchronisation means for synchronising the movement of the apparatus with the movement of the carcass.

13. Apparatus according to any of claims 5 to 11, whereby one of the jaws of the grasping-element has a profiled surface and one has a smooth surface.
